# EUROPÄISCHE PATENTSCHRIFT

(11) **EP 2 443 001 B1**
(45) Veröffentlichungstag und Bekanntmachung des Hinweises auf die Patenterteilung: **24.10.2018**
(21) Anmeldenummer: 10724512.8
(22) Anmeldetag: 14.06.2010
(51) Int. Cl.: B60R 25/04, B60S 5/02, B60S 5/06, G07B 15/02, G07C 9/00, H02J 7/00, B60L 11/18, H04L 9/08, H04L 9/32, H04L 29/06

(54) **VERFAHREN UND VORRICHTUNG ZUR KOMMUNIKATION ZWISCHEN EINEM ELEKTROFAHRZEUG UND EINER LADESTATION**
METHOD AND APPARATUS FOR COMMUNICATING BETWEEN AN ELECTRIC VEHICLE AND A CHARGING STATION
PROCÉDÉ ET DISPOSITIF DE COMMUNICATION ENTRE UN VÉHICULE ÉLECTRIQUE ET UNE STATION DE RECHARGE

(30) Priorität: 15.06.2009 DE 102009025303
(43) Veröffentlichungstag der Anmeldung: 25.04.2012
(60) Teilanmeldung: 12179544.7
(73) Patentinhaber: innogy SE, 45128 Essen (DE)
(72) Erfinder: GAUL, Armin, 59379 Selm (DE); DIEFENBACH, Ingo, 59425 Unna (DE); HEIDER, Markus, 93133 Burglengenfeld (DE)
(74) Vertreter: Cohausz & Florack
(86) Internationale Anmeldenummer: PCT/EP2010/058302
(87) Internationale Veröffentlichungsnummer: WO 2010/146015

(56) Entgegenhaltungen:
- WO-A1-2008/015893
- WO-A1-2009/034877
- WO-A1-2009/034878
- US-A1- 2006 204 004
- US-A1- 2007 123 316
- US-A1- 2007 126 395

## Beschreibung

Der Gegenstand der vorliegenden Erfindung betrifft ein Verfahren und eine Vorrichtung zur Kommunikation zwischen einem Elektrofahrzeug und einer Ladestation, insbesondere ein ladestationsseitiges Verfahren, ein fahrzeugseitiges Verfahren, Computerprogrammcodemittel, eine Vorrichtung zur Kommunikation mit einem Elektrofahrzeug, eine Vorrichtung zur Kommunikation mit einer Ladestation für ein Elektrofahrzeug, ein System zur Kommunikation zwischen einem Elektrofahrzeug und einer Ladestation.

Die Verwendung von Elektrofahrzeugen verspricht eine Lösung vieler aktueller Probleme des Individualverkehrs: der für ihren Antrieb benötigte Strom kann auf umweltfreundliche Weise hergestellt werden, es entstehen keine Abgase am Fahrzeug selbst, die Lärmbelastung wird reduziert und der Elektroantrieb selbst ermöglicht prinzipbedingt einen höheren Wirkungsgrad als ein Motor, welcher auf der Verbrennung fossiler Brennstoffe beruht.

Zum breiten Masseneinsatz von Elektrofahrzeugen muss aber auch eine einfache und flächendeckende Möglichkeit der Energieaufladung geschaffen werden analog zum bekannten Tankstellennetz für flüssigen Kraftstoff. Hierzu müssen auch Fragen der Abrechnung eines Entgelts für ein solches Aufladen beantwortet werden. Augenblicklich ist zwar zumindest flächendeckend die Infrastruktur für eine Stromversorgung vorhanden, der Energieverbrauch an einer Steckdose etwa kann aber nicht ohne Weiteres nach dem jeweiligen Verbraucher aufgeschlüsselt und zeitnah ermittelt, ggf. begrenzt und auf der Stelle fakturiert werden.

Um von jedermann nutzbare Stromtankstellen, also öffentlich nutzbare Ladestationen, praktikabel zu machen, müssen diese aber auch so einfach zu bedienen sein wie Zapfsäulen für flüssige Kraftstoffe und auch eine analog mögliche Begrenzung und Abrechnung des Aufladens ermöglichen. Aus Sicht des Fahrzeugnutzers soll sich also möglichst wenig ändern.

Darüber hinaus offenbart die WO 2008/015893 A1 ein Verfahren zur Kommunikation mit einem Elektrofahrzeug, bei dem über einen Pilotleiter ein Auslösesignal in Form einer Fahrzeug-ID Anfrage gesendet wird, woraufhin ein Fahrzeugidentifikationssignals gesendet und von der Ladestation erfasst werden kann. Nach einer Überprüfung der Fahrzeug-ID wird dann die Stromversorgung auf einem Leistungsleiter zur Ladung des Energiespeichers des Fahrzeugs freigegeben. Die WO 2009/034878 A1 beschreibt, dass nach einer erfolgreichen Kopplung des Ladekabelsteckers mit einem Gegenstück automatisch der Ladevorgang initiiert werden kann. Zur Realisierung dieser Detektion lehrt diese Druckschrift, neben einem Pilotleiter eine weitere Steuerleitung vorzusehen.
Davon ausgehend liegt dem Gegenstand der vorliegenden Erfindung die Aufgabe zugrunde, dem Benutzer eines Elektrofahrzeugs eine Benutzung der Ladestation zu ermöglichen, welche der Benutzung einer Zapfsäule für Flüssigkraftstoff möglichst nahe kommt.
Diese Aufgabe wird gegenständlich durch die unabhängigen Ansprüche 1, 2, 4, 10 und 11 gelöst. Der in der Beschreibung aufgeführte kryptographische Schlüssel, und die dazugehörige Kodierung, Verschlüsselung und Entschlüsselung sowie das dynamic host configuration protocol sind nicht Teil der Erfindung.

Es ist erkannt worden, dass die moderne Informationstechnik verwendet werden kann, um eine Vielzahl von Parametern, welche für den Ladevorgang sinnvoller Weise bestimmt werden sollten, automatisch durch Kommunikation zwischen Ladestation und Elektrofahrzeug zu ermitteln. Das betrifft einerseits eine Identifikation des aufzuladenden Fahrzeugs zu Zwecken der Abrechnung und Verhinderung des unsachgemäßen Missbrauchs und andererseits die Bestimmung von Parametern des Ladestroms, welche den technischen Gegebenheiten der individuellen Ladestation und des Elektrofahrzeugs Rechnung tragen. Diese Kommunikation geschieht vorteilhafter Weise auf Grundlage einer mechanischen und elektrisch leitenden Verbindung zwischen Ladestation und Elektrofahrzeug, welche vom Benutzer einer Ladestation analog zum Einführen einer Zapfpistole in den Einfüllstutzen eines herkömmlichen Kraftfahrzeugs bequem vorgenommen werden kann. Auf dieser Verbindung ist ein Datenaustausch zwischen Ladestation und Elektrofahrzeug möglich, welcher ein den technischen Vorgaben entsprechendes Aufladen und eine richtige Abrechnung der Lademenge ermöglicht. Gleichzeitig kann sichergestellt werden, dass ein gegebenenfalls hoher Ladestrom nur dann fließt, wenn die Verbindung vorschriftsgemäß hergestellt wurde und die notwendige Freigabe erteilt wurde, wodurch das Schadensrisiko minimiert wird.

Bei dem Elektrofahrzeug kann es sich sowohl um ein Fahrzeug, welches ausschließlich einen Elektromotor aufweist, als auch um ein Fahrzeug handeln, welches sowohl einen Elektromotor als auch einen Verbrennungsmotor wie etwa einen Ottomotor oder eine andere Art von Motor aufweist. Die Ladestation kann sowohl eine öffentliche stationäre Ladestation sein als auch eine Ladestation, welche nur einem bestimmten Personenkreis zugänglich ist. Bei der Ladestation kann es sich auch um eine mobile Ladestation handeln. Die Ladestation kann Strom aus einem Stromnetz beziehen, elektrische Energie in Akkumulatoren vorhalten oder einen Generator aufweisen, mit dem elektrische Energie erzeugt werden kann. Die Verbindung zwischen Ladestation und Elektrofahrzeug kann elektromechanisch mittels einer Kabelgarnitur hergestellt werden. Die Kabelgarnitur kann fest mit der Ladestation, fest mit dem Elektrofahrzeug oder entweder mit der Ladestation oder mit dem Elektrofahrzeug fest verbunden sein. Die Kabelgarnitur kann eine Vielzahl von einzelnen Leitern umfassen. Insbesondere kann die Kabelgarnitur einen Leistungsleiter zum Übertragen des Ladestroms und einen Pilotleiter umfassen. Bei dem Ladestrom kann es sich um Gleichstrom, um Wechselstrom oder um Drehstrom handeln.

Das Generieren eines ersten vorbestimmten Gleichspannungspegels auf einem Pilotleiter kann durch Anlegen eines vorbestimmten Gleichspannungspegels über einen Widerstand auf der Seite der Ladestation an den Pilotleiter erfolgen. Hierbei kann es sich auch um den Innenwiderstand der Vorrichtung handeln, welche den Gleichspannungspegel generiert. Hierbei ist der Gleichspannungspegel diejenige Gleichspannung, welche sich nach Abzug etwaig auf dem Pilotleiter überlagerter und zeitlich variabler Signalspannungen ergibt. Beim Herstellen der elektrischen Verbindung mit dem Elektrofahrzeug kann fahrzeugseitig eine Verbindung des Pilotleiters zu einem Massepotential über einen Widerstand vorhanden sein, wodurch ein Spannungsteiler gebildet wird und ein zweiter Gleichspannungspegel auf dem Pilotleiter entsteht, welcher auf der Seite der Ladestation erkannt werden kann.

Ladestationsseitig kann ein Auslösesignal auf den Pilotleiter ausgesandt werden. Das Auslösesignal kann ein zeitlich variables Signal sein, welches dem Gleichspannungspegel auf dem Pilotleiter überlagert ist und diesen nicht verändert.

Ladestationsseitig kann ein Fahrzeugidentifikationssignal auf dem Pilotleiter erfasst werden. Das Fahrzeugidentifikationssignal kann ein zeitlich variables Signal sein, welches dem Gleichspannungspegel auf dem Pilotleiter überlagert ist und diesen nicht verändert. Das Fahrzeugidentifikationssignal kann verschlüsselt sein. Das Fahrzeugidentifikationssignal kann Informationen für eine eindeutige Identifikation des an den Pilotleiter angeschlossenen Elektrofahrzeugs umfassen und auch weitere Informationen umfassen. Das Fahrzeugidentifikationssignal kann gemäß den Erfordernissen eines Kommunikationsprotokolls aufgebaut sein.

Ladestationsseitig kann die Stromversorgung auf dem Leistungsleiter freigegeben werden. Die Freigabe der Stromversorgung auf dem Leistungsleiter kann durch Einschalten eines Schalters oder eines Schützes erfolgen, welcher den Leistungsleiter mit einer Spannungsquelle für die Stromversorgung verbindet. Der Leistungsleiter kann separat und elektrisch isoliert vom Pilotleiter ausgebildet sein. Der Leistungsleiter kann in der Kabelgarnitur des Pilotleiters umfasst sein. Es kann sein, dass ohne Freigabe der Stromversorgung der Leistungsleiter spannungsfrei ist. Physikalische Eigenschaften der Spannung auf dem Leistungsleiter nach Freigabe der Stromversorgung wie etwa Höhe der Spannung, Frequenz, Strombegrenzung, Ausgangswiderstand und andere Eigenschaften können von dem erfassten Fahrzeugidentifikationssignal abhängen.

Gemäß einem vorteilhaften Ausführungsbeispiel wird vorgeschlagen, dass das Verfahren das Erfassen einer vorübergehenden vorbestimmten Gleichspannungsänderung auf dem Pilotleiter umfasst, welche vorübergehende vorbestimmte Gleichspannungsänderung zumindest teilweise dem Auslösesignal überlagert ist. Dies kann den technischen Effekt haben, dass der Ladestation der Empfang des Auslösesignals auf dem Pilotleiter positiv quittiert wird. Durch die Überlagerung der Gleichspannungsänderung auf das Auslösesignal kann die Quittierung mittels der Gleichspannungsänderung von der Ladestation erfasst werden, ohne dass das Aussenden des Auslösesignals zuvor beendet werden muss. Es kann sein, dass einige Zeit nach Beginn des Aussendens des Auslösesignals auf dem Pilotleiter durch die Ladestation eine Gleichspannungsänderung auf dem Pilotleiter stattfindet, welche zumindest teilweise zeitlich mit dem Aussenden des Auslösesignals überlappt und zumindest teilweise dem Auslösesignal überlagert ist. Die Gleichspannungsänderung kann als Reaktion auf das Auslösesignal und in der Art einer Stufenfunktion erfolgen. Die Gleichspannungsänderung kann durch einen fahrzeugseitigen Schaltvorgang verursacht werden, beispielsweise durch das parallel geschaltete Verbinden des Pilotleiters zu einem Masseleiter über einen weiteren Widerstand oder das Einschalten einer Transistorschaltung zwischen Pilotleiter und Masseleiter.

Gemäß einem vorteilhaften Ausführungsbeispiel wird vorgeschlagen, dass das Verfahren das Aussenden eines Informationen zu einem Ladestrom umfassenden Informationssignals auf dem Pilotleiter umfasst. Dies kann den technischen Effekt haben, dass die Ladestation in dem Elektrofahrzeug eine Einstellung der Ladeelektronik veranlassen kann, welche kompatibel zu den Eigenschaften des von der Ladestation gelieferten Ladestroms ist. Beispielsweise kann die Ladestation die Einschaltung eines Spannungswandlers entsprechend der Höhe der Spannung des Ladestroms veranlassen. Somit kann die Elektronik des Elektrofahrzeugs sich auf bestimmte Gegebenheiten einstellen, noch bevor der eigentliche Ladestrom fließt.

Gemäß einem vorteilhaften Ausführungsbeispiel wird vorgeschlagen, dass das Informationssignal und das Auslösesignal jeweils pulsweitenmodulierte Signale sind. Dies kann den technischen Effekt haben, dass die Erzeugung der Signale, die Überlagerung der Signale auf den Gleichspannungspegel und die Erfassung der Signale mit einfachen Mitteln zu implementieren ist. Es kann sein, dass der obere Scheitelwert des pulsweitenmodulierten Signals dem Gleichspannungspegel auf dem Pilotleiter entspricht. Es kann sein, dass der untere Scheitelwert des pulsweitenmodulierten Signals einer negativen Spannung entspricht. Insbesondere kann der untere Scheitelwert des pulsweitenmodulierten Signals einer negativen Spannung mit dem Betrag des Gleichspannungspegels auf dem Pilotleiter entsprechen.

Gemäß einem vorteilhaften Ausführungsbeispiel wird vorgeschlagen, dass die Signalformen des Informationssignals und des Auslösesignals jeweils mindestens einen Parameter aufweisen, welcher jeweils in verschiedenen, nicht überlappenden Wertebereichen liegt. Der Frequenzbereich des Informationssignals und der Frequenzbereich des Auslösesignals könnten jeweils nicht überlappend sein. Das Informationssignal und das Auslösesignal könnten gemäß einer dazu alternativen Ausgestaltung auf eine jeweils unterschiedliche Trägerfrequenz über Amplitudenmodulation oder Frequenzmodulation aufmoduliert sein.

Gemäß einem vorteilhaften Ausführungsbeispiel wird vorgeschlagen, dass die Tastverhältnisse des Informationssignals und des Auslösesignals jeweils in sich miteinander nicht überlappenden Bereichen liegen. Dies kann den technischen Effekt haben, dass das Informationssignal und das Auslösesignal durch das empfangende Elektrofahrzeug nicht miteinander verwechselt werden können. Insbesondere kann das Auslösesignal ein Tastverhältnis von mindestens 90 Prozent oder höchstens 5 Prozent und das Informationssignal ein Tastverhältnis in einem Bereich zwischen 5 Prozent und 80 Prozent aufweisen.

Gemäß einem vorteilhaften Ausführungsbeispiel wird vorgeschlagen, dass die Freigabe der Stromversorgung auf dem Leistungsleiter erfolgt, wenn ein dritter vorbestimmter Gleichspannungspegel auf dem Pilotleiter erfasst wurde. Dies kann den technischen Effekt haben, dass eine positive Bestätigung der mit dem Informationssignal übertragenen Parameter durch das Elektrofahrzeug erfolgt, bevor eine Freigabe der Stromversorgung und dadurch eine Beaufschlagung des Leistungsleiters mit der Ladespannung und dem Ladestrom erfolgt. Es wird also eine Beaufschlagung des Leistungsleiters mit Ladespannung verhindert, wenn dem auf Seiten des Elektrofahrzeugs Gründe entgegen stehen. Der dritte vorbestimmte Gleichspannungspegel kann durch einen fahrzeugseitigen Schaltvorgang verursacht werden, beispielsweise durch das parallel geschaltete Verbinden des Pilotleiters zu einem Masseleiter über einen weiteren Widerstand oder durch das Einschalten einer weiteren Transistorschaltung zwischen Pilotleiter und Masseleiter.

Gemäß einem vorteilhaften Ausführungsbeispiel wird vorgeschlagen, dass das Verfahren das Unterbrechen der Stromversorgung auf dem Leistungsleiter bei Erfassung eines dem dritten vorbestimmten Gleichspannungspegel ungleichen Gleichspannungspegels auf dem Pilotleiter umfasst. Dies kann den technischen Effekt haben, dass in dem Augenblick, in dem fahrzeugseitig keine aktive Nachfrage mehr nach einer Freigabe der Stromversorgung auf dem Leistungsleiter erfolgt, diese Freigabe unterbrochen wird und der Leistungsleiter entsprechend wieder spannungsfrei wird. Damit wird verhindert, dass auch bei einem wie auch immer verursachten fahrzeugseitigen Systemausfall die Stromversorgung unterbrochen wird. Der Abbruch der Stromversorgung muss also nicht aktiv angefordert werden, sondern es genügt schon die Unterbrechung der Anforderung der Stromversorgung für einen Abbruch derselben.

Gemäß einem vorteilhaften Ausführungsbeispiel wird vorgeschlagen, dass das Fahrzeugidentifikationssignal ein bipolares Signal ist, welches eine Angabe zu einer Position in einem kryptographischen Schlüssel, eine Fahrzeugkennung, welche mindestens teilweise bestimmt durch die Position in einem kryptographischen Schlüssel und mindestens teilweise bestimmt durch den kryptographischen Schlüssel verschlüsselt wurde, und Informationen zu einer zyklischen Redundanzprüfung des Fahrzeugidentifikationssignals umfasst. Dies kann den technischen Effekt haben, dass eine abhörsichere Identifikation des Elektrofahrzeugs durch die Ladestation ermöglicht wird. Hierdurch wird es wiederum möglich, zu diesem identifizierten Elektrofahrzeug oder zum Typ des identifizierten Elektrofahrzeugs hinterlegte Informationen abzurufen, welche eine zum jeweiligen Elektrofahrzeug passende Parametrisierung des Ladestroms ermöglichen. Insbesondere können die maximal mögliche Ladespannung, der maximal mögliche Ladestrom, die maximale Ladedauer, die maximal mögliche Ladedauer und weitere Parameter bestimmt werden.

Gemäß einem vorteilhaften Ausführungsbeispiel wird vorgeschlagen, dass die Angabe zu einer Position in einem kryptographischen Schlüssel aus einem Byte besteht, wobei die Fahrzeugkennung aus einer Folge von bis zu zweiunddreißig Bytes besteht, wobei die Informationen zu einer zyklischen Redundanzprüfung aus zwei Bytes besteht und wobei das Fahrzeugidentifikationssignal zusätzlich eine Startkennung aus einem Byte mit dem Wert 0x01 und eine Angabe zur Länge des Fahrzeugidentifikationssignals aus einem Byte umfasst.

Ein bipolares Signal kann ein Signal sein, welches im Wesentlichen aus rechteckförmigen Signalfolgen zwischen einem oberen Spannungswert und einem unteren Spannungswert zusammengesetzt ist. Bei dem kryptographischen Schlüssel kann es sich um eine Folge mit fester Länge von Zeichen oder Bytes handeln, welche jeweils zur Verschlüsselung verwendet werden. Insbesondere kann jeweils ein Byte des Schlüssels zur Verschlüsselung eines Bytes mittels der Anwendung einer exklusiven Oder-Verknüpfung (XOR) verwendet werden. Der identische kryptographische Schlüssel kann in der Ladestation und im Elektrofahrzeug hinterlegt sein. Die Position im kryptographischen Schlüssel, für die eine Angabe im Fahrzeugidentifikationssignal umfasst ist, kann fahrzeugseitig zufällig erzeugt worden sein. Die Angabe zu einer Position in dem kryptographischen Schlüssel kann aus einer Indexzahl für den kryptographischen Schlüssel bestehen. Die Position im kryptographischen Schlüssel, für die eine Angabe im Fahrzeugidentifikationssignal umfasst ist, kann das Zeichen oder den Beginn einer Reihe von Zeichen angeben, welche zur Verschlüsselung der Fahrzeugkennung verwendet wurden oder zur Entschlüsselung der verschlüsselten Fahrzeugkennung verwendet werden können. Die Fahrzeugkennung kann eine beliebige Länge in Zeichen oder Bytes haben. Die Fahrzeugkennung kann ein spezielles, individuelles Fahrzeug, etwa wie bei einer Fahrgestellnummer, einen bestimmten Fahrzeugtyp oder eine bestimmte fahrzeugseitige Ladegerätkonfiguration kennzeichnen.

Die Fahrzeugkennung kann auf eine Art und Weise verschlüsselt sein, dass eine eindeutige Entschlüsselung entweder vollständig durch Kenntnis des kryptographischen Schlüssels und Kenntnis einer Position im kryptographischen Schlüssel möglich ist oder so verschlüsselt sein, dass eine Kenntnis des kryptographischen Schlüssels, eine Kenntnis einer Position im kryptographischen Schlüssel und darüber hinaus die Kenntnis weiterer Informationen und die Anwendung weiterer Entschlüsselungsverfahren notwendig ist. Die Informationen zu einer zyklischen Redundanzprüfung des Fahrzeugidentifikationssignals können eine störungssichere Übertragung des Fahrzeugidentifikationssignals gewährleisten. Die Informationen zu einer zyklischen Redundanzprüfung des Fahrzeugidentifikationssignals können für eine Redundanzprüfung gemäß dem CRC-Verfahren verwendet werden.

Gemäß einem vorteilhaften Ausführungsbeispiel wird vorgeschlagen, dass das Fahrzeugidentifikationssignal eine Angabe zur Signallänge der Fahrzeugkennung umfasst. Dies kann den technischen Effekt haben, dass flexibel verschieden lange Fahrzeugkennungen verwendet werden können, wodurch sowohl Kennungen eines speziellen, individuellen Fahrzeugs als auch Kennungen eines Fahrzeugtyps bei ein und derselben Ladestation verwendet werden können. Die Angabe zur Signallänge der Fahrzeugkennung kann eine Angabe der Länge der Fahrzeugkennung in Zeichen oder in Byte sein.

Gemäß einem vorteilhaften Ausführungsbeispiel wird vorgeschlagen, dass das Fahrzeugidentifikationssignal ein pulsweitenmoduliertes Signal ist. Dies kann den technischen Effekt haben, dass die Erzeugung des Fahrzeugidentifikationssignals mit einfachen Mitteln zu implementieren ist.

Ein weiterer Gegenstand ist ein Verfahren zur Kommunikation zwischen einem Elektrofahrzeug und einer Ladestation, wobei das Fahrzeugidentifikationssignal ein pulsweitenmoduliertes, bipolares Signal ist und eine Angabe zu einer Fahrzeugkennung, welche mindestens teilweise bestimmt durch die Position im kryptographischen Schlüssel und mindestens teilweise bestimmt durch den kryptographischen Schlüssel verschlüsselt wurde und Informationen zu einer zyklischen Redundanzprüfung des Fahrzeugidentifikationssignals sowie Informationen zu einer zyklischen Redundanzprüfung eines Zählwertes umfasst, wobei der Zählwert zuvor durch ein seitens der Ladestation ausgesandtes Erzeugungssignal an das Elektrofahrzeug übertragen wurde. Dabei enthält das seitens der Ladestation ausgesandte Erzeugungssignal den von der Ladestation vorgebbaren Zählwert und eine Angabe zu einer Position in einem kryptographischen Schlüssel sowie Informationen zu einer zyklischen Redundanzprüfung des Erzeugungssignals. Bei dem Zählwert kann es sich beispielsweise um das Messergebnis des Zählers selbst handeln. Der Zählwert kann auch ein von der Ladestation vorgebener, vorzugweise inkremental ansteigender Wert sein.

Ein weiterer Gegenstand ist ein Verfahren zur Kommunikation mit einer Ladestation für ein Elektrofahrzeug, wobei das Verfahren das Erfassen eines Auslösesignals auf einem Pilotleiter, das Aussenden eines Fahrzeugidentifikationssignals auf dem Pilotleiter und die Aufnahme eines Ladestroms auf einem Leistungsleiter umfasst.

Ein weiterer Gegenstand sind Computerprogrammcodemittel, welche geeignet sind, die Verfahrensschritte eines der beiden gegenständlichen Verfahren auszuführen.

Ein weiterer Gegenstand ist eine Vorrichtung zur Kommunikation mit einem Elektrofahrzeug, welche Vorrichtung Spannungserzeugungsmittel zum Generieren eines ersten vorbestimmten Gleichspannungspegels auf einem Pilotleiter, Detektormittel zum Erkennen des Bestehens einer elektrischen Verbindung mit einem Elektrofahrzeug durch Erfassen eines zweiten vorbestimmten Gleichspannungspegels auf dem Pilotleiter, Signalerzeugungsmittel zum Aussenden eines Auslösesignals auf dem Pilotleiter, Sensormittel zum Erfassen eines Fahrzeugidentifikationssignals auf dem Pilotleiter und Schaltmittel zur Freigabe der Stromversorgung auf einem Leistungsleiter umfasst.

Ein weiterer Gegenstand ist eine Vorrichtung zur Kommunikation mit einer Ladestation für ein Elektrofahrzeug, welche Vorrichtung Spannungsteilermittel zum Erzeugen eines ersten vorbestimmten Gleichspannungspegels auf einem Pilotleiter bei Anlegen eines zweiten vorbestimmten Gleichspannungspegels auf dem Pilotleiter, Sensormittel zum Erfassen eines Auslösesignals auf dem Pilotleiter, Signalerzeugungsmittel zum Aussenden eines Fahrzeugidentifikationssignals auf dem Pilotleiter, und Ladungsaufnahmemittel zur Aufnahme eines Ladestroms auf einem Leistungsleiter umfasst.

Die Spannungsteilermittel können aus einem Widerstand oder einem Transistorschaltkreis gebildet sein, welcher den Pilotleiter mit einem Masseleiter verbindet und so ausgelegt ist, dass er bei Herstellung einer elektromechanischen Verbindung des Pilotleiters mit der Ladestation und dem Elektrofahrzeug in einem Gleichspannungspegel auf dem Pilotleiter resultiert, welcher niedriger ist als der Gleichspannungspegel auf dem Pilotleiter, welcher ladestationsseitig ohne eine Verbindung mit dem Elektrofahrzeug bestünde.

Ein weiterer Gegenstand ist ein System zur Kommunikation zwischen einem Elektrofahrzeug und einer Ladestation, welches System Spannungserzeugungsmittel zum Generieren eines ersten vorbestimmten Gleichspannungspegels auf einem Pilotleiter, Spannungsteilermittel zum Erzeugen eines zweiten vorbestimmten Gleichspannungspegels auf dem Pilotleiter bei Anlegen des ersten vorbestimmten Gleichspannungspegels auf dem Pilotleiter, Detektormittel zum Erkennen des Bestehens einer elektrischen Verbindung zwischen der Ladestation und dem Elektrofahrzeug durch Erfassen des zweiten vorbestimmten Gleichspannungspegels auf dem Pilotleiter, erste Signalerzeugungsmittel zum Aussenden eines Auslösesignals auf dem Pilotleiter, Sensormittel zum Erfassen eines Auslösesignals auf dem Pilotleiter, zweite Signalerzeugungsmittel zum Aussenden eines Fahrzeugidentifikationssignals auf dem Pilotleiter, Sensormittel zum Erfassen eines Fahrzeugidentifikationssignals auf dem Pilotleiter, Schaltmittel zur Freigabe der Stromversorgung auf einem Leistungsleiter und Ladungsaufnahmemittel zur Aufnahme eines Ladestroms auf einem Leistungsleiter umfasst.

Ferner ist ein Fahrzeugidentifikationssignal zur Kommunikation zwischen einem Elektrofahrzeug und einer Ladestation beschrieben, welches Fahrzeugidentifikationssignal ein pulsweitenmoduliertes, bipolares Signal ist und eine Angabe zu einer Position in einem kryptographischen Schlüssel, eine Fahrzeugkennung, welche mindestens teilweise bestimmt durch die Position im kryptographischen Schlüssel und mindestens teilweise bestimmt durch den kryptographischen Schlüssel verschlüsselt wurde und Informationen zu einer zyklischen Redundanzprüfung des Fahrzeugidentifikationssignals umfasst.

Darüber hinaus ist ein Fahrzeugidentifikationssignal zur Kommunikation zwischen einem Elektrofahrzeug und einer Ladestation beschrieben, welches Fahrzeugidentifikationssignal ein pulsweitenmoduliertes, bipolares Signal ist und eine Angabe zu einer Fahrzeugkennung, welche mindestens teilweise bestimmt durch die Position im kryptographischen Schlüssel und mindestens teilweise bestimmt durch den kryptographischen Schlüssel verschlüsselt wurde und Informationen zu einer zyklischen Redundanzprüfung des Fahrzeugidentifikationssignals sowie Informationen zu einer zyklischen Redundanzprüfung eines Zählwertes umfasst, wobei der Zählwert zuvor durch ein seitens der Ladestation ausgesandtes Erzeugungssignal an das Elektrofahrzeug übertragen wurde. Dabei enthält das seitens der Ladestation ausgesandte Erzeugungssignal den von der Ladestation vorgebbaren Zählwert und eine Angabe zu einer Position in einem kryptographischen Schlüssel sowie Informationen zu einer zyklischen Redundanzprüfung des Erzeugungssignals. Durch eine solche Art der Kommunikation lässt sich eine noch weiter verbesserte Datenübertragungssicherheit erreichen. Insbesondere ergibt sich dadurch ein verbesserter Schutz gegen sogenannte "Replay-Angriffe", bei denen ein nicht-authorisierter Benutzer zuvor aufgezeichnete oder ausgespähte Daten aussendet, um eine fremde Identität eines authorisierten Benutzers vorzutäuschen.

Nachfolgend wird der Gegenstand anhand von Ausführungsbeispiele zeigenden Zeichnungen näher erläutert. In der Zeichnung zeigen:
- Fig. 1: einen beispielhaften Aufbau einer Vorrichtung in einem Elektrofahrzeug und einer Vorrichtung in einer Ladestation für ein Elektrofahrzeug zur wechselseitigen Kommunikation;
- Fig. 2a: einen beispielhaften Spannungsverlauf am Pilotleiter bei einer ersten Art der Kommunikation zwischen einem Elektrofahrzeug und einer Ladestation für ein Elektrofahrzeug;
- Fig. 2b: einen beispielhaften Spannungsverlauf am Pilotleiter bei einer zweiten Art der Kommunikation zwischen einem Elektrofahrzeug und einer Ladestation für ein Elektrofahrzeug;
- Fig. 3: ein beispielhaftes Ablaufdiagramm.

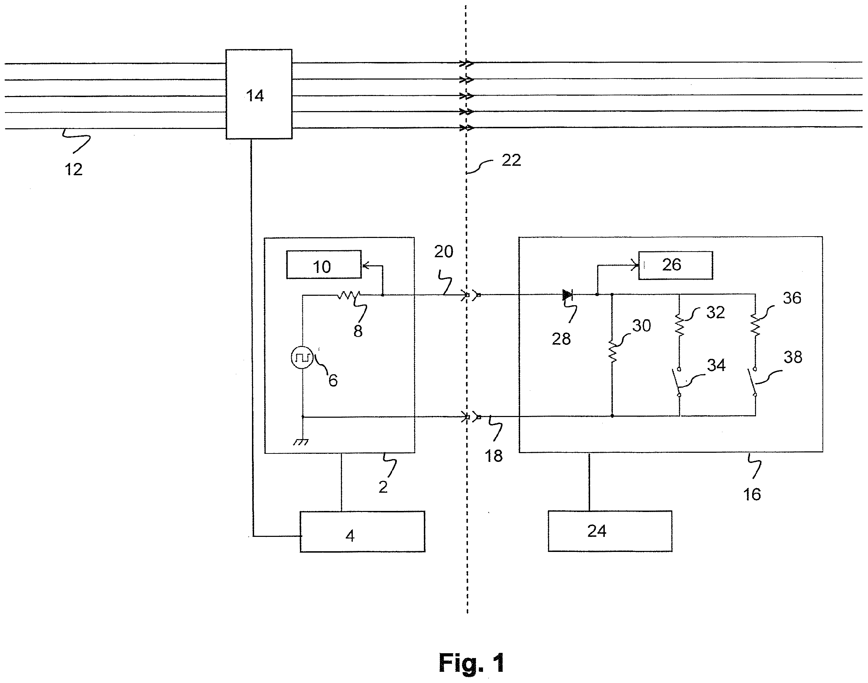

Fig. 1 zeigt eine Ladeelektronik 2 an einer Ladestation für Elektrofahrzeuge, welche eine Oszillator-Spannungsquelle 6, einen Ladewiderstand 8 und ein Spannungsmessgerät 10 umfasst, sowie ein Ladestationssteuergerät 4, welches an die Ladeelektronik 2 und an ein Trennschaltelement 14 angeschlossen ist Das Trennschaltelement 14 ist an einen Leistungsleiter 12 angeschlossen und schaltet diesen. Ferner zeigt Fig. 1 eine Fahrzeugelektronik 16 in einem Elektrofahrzeug und ein Fahrzeugsteuergerät 24. Die Fahrzeugelektronik 16 weist eine Diode 28, ein erstes Widerstandselement 30, ein zweites Widerstandselement 32, ein drittes Widerstandselement 36, ein erstes Schaltelement 34, ein zweites Schaltelement 38 und ein Messgerät 26 auf. Aus der Ladeelektronik 2 führen eine Pilotsignalleitung 20 und eine Pilotsignalmasseleitung 18. Mittels einer Schnittstelle 22 ist die Ladeelektronik 2 durch die Pilotsignalleitung 20 und die Pilotsignalmasseleitung 18 mit der Fahrzeugelektronik 16 verbunden. Der Leistungsleiter 12 führt ebenfalls über die Schnittstelle 22 in das Elektrofahrzeug. Die Fig. 1 zeigt also einen Zustand, in der ein Elektrofahrzeug an eine Ladestation für Elektrofahrzeuge elektromechanisch angeschlossen wurde.

Der Leistungsleiter 12 sowie die Pilotsignalleitung 20 und die Pilotsignalmasseleitung 18 führen über dieselbe Kabelgarnitur von der Ladestation in das Elektrofahrzeug. Die Kabelgarnitur und also auch der Leistungsleiter 12, die Pilotsignalleitung 20 und die Pilotsignalmasseleitung 18 können mittels einer Steckverbindung an der Schnittstelle 22 aufgetrennt werden, um etwa ein Fortbewegen des Elektrofahrzeugs und den Anschluss eines anderen Elektrofahrzeugs an die Ladestation oder des selben Elektrofahrzeugs zu einem späteren Zeitpunkt zu ermöglichen.

Die in Fig. 1 gezeigte Anordnung ermöglicht nun eine Versorgung des Elektrofahrzeugs mit elektrischer Energie über den Leistungsleiter 12 und also ein Aufladen von Speichermitteln für elektrische Energie im Elektrofahrzeug. Der Leistungsleiter 12 umfasst fünf Leitungen und zwar jeweils eine Leitung für die drei Phasen eines Drehstroms sowie je eine Leitung für einen Neutralleiter und einen Masseleiter. Das Trennschaltelement 14 kann die Verbindung des Leistungsleiters 12 zur Schnittstelle 22 ein- und ausschalten. Das Schaltelement 14 wird von dem Ladestationssteuergerät 4 kontrolliert, welches auch mit der Ladeelektronik 2 verbunden ist. Die Oszillator-Spannungsquelle 6 der Ladeelektronik 2 kann sowohl eine Gleichspannung als auch ein pulsweitenmoduliertes Rechtecksignal beliebiger Amplitude auf der Pilotsignalleitung 20 erzeugen. Die Oszillator-Spannungsquelle wird vom Ladestationssteuergerät 4 kontrolliert. Das Spannungsmessgerät 10 ermöglicht die Bestimmung einer Gleich- und Wechselspannungsamplitude wie auch die Bestimmung des Tastverhältnisses und der Amplitude eines pulsweitenmodulierten Signals. Das Spannungsmessgerät 10 kann von dem Ladestationssteuergerät 4 ausgelesen werden.

Das erste Schaltelement 34 ist eine Transistorschaltung und ist mit dem zweiten Widerstandselement 32 in Reihe geschaltet. Das zweite Schaltelement 38 ist ebenfalls eine Transistorschaltung und ist mit dem dritten Widerstandselement 36 in Reihe geschaltet. Diese beiden Reihenschaltungen wiederum sind untereinander und mit dem ersten Widerstandselement 30 parallel geschaltet. Gesteuert vom Fahrzeugsteuergerät 24 kann die Fahrzeugelektronik 16 einzeln, unabhängig und gegebenenfalls gepulst das erste Schaltelement 34 und das zweite Schaltelement 38 ein- und ausschalten. Das Messgerät 26 ermöglicht die Bestimmung einer Gleich- und Wechselspannungsamplitude wie auch die Bestimmung des Tastverhältnisses und der Amplitude eines pulsweitenmodulierten Signals. Das Messgerät 26 kann von dem Fahrzeugsteuergerät 24 ausgelesen werden.

Sowohl das Fahrzeugsteuergerät 24 als auch das Ladestationssteuergerät 4 können einen Mikroprozessor oder einen Computer umfassen auf dem Programmcode ausgeführt wird, welcher ihre Arbeitsweise festlegt.

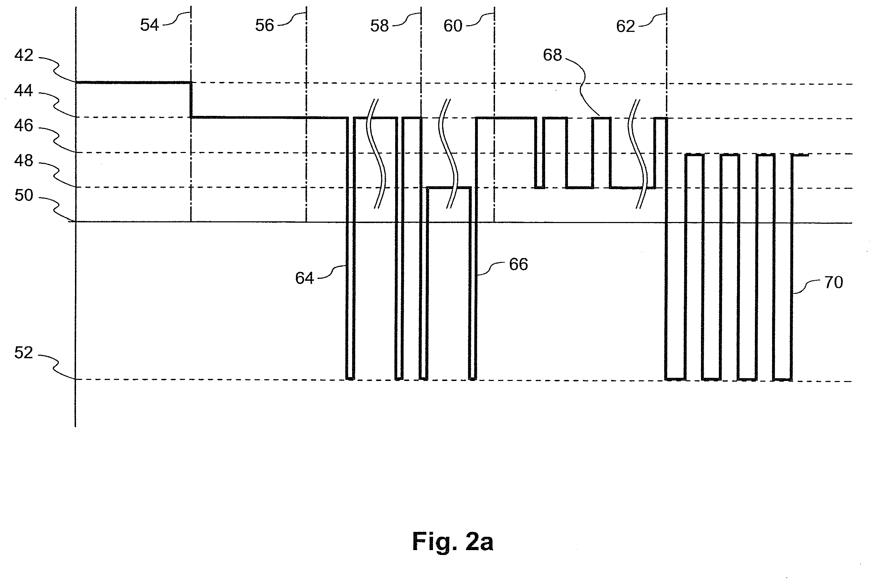

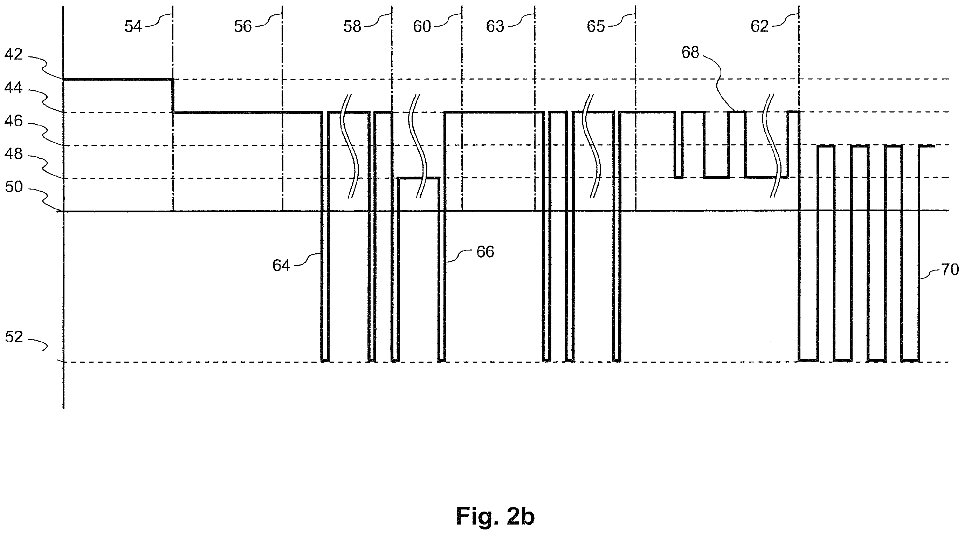

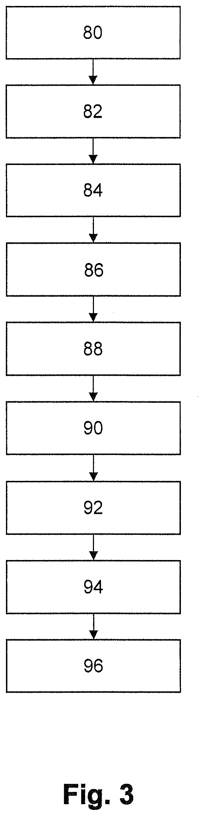

Anhand der Figuren 2a, 2b und Fig. 3 werden nun beispielhafte Abläufe der Kommunikation während eines Ladevorgangs beschrieben. Die Fig.2a zeigt hierbei den Spannungsverlauf und das Massepotential 50 an der Pilotsignalleitung 20 gemäß einem ersten Ausführungsbeispiel:
Im Ausgangszustand sind ein Elektrofahrzeug und eine Ladestation für ein Elektrofahrzeug nicht miteinander verbunden. Das Trennschaltelement 14 ist geöffnet und unterbricht also den Leistungsleiter 12. In einem ersten Schritt 80 erkennt das Ladestationssteuergerät 4, dass der Endlagenschalter geschaltet ist und veranlasst, dass die Oszillator-Spannungsquelle 6 die Pilotsignalleitung 20 mit einer ersten Gleichspannung 42 von zwölf Volt versorgt. Das Spannungsmessgerät 10 misst diese erste Gleichspannung 42 an der Pilotsignalleitung 20. Das Elektrofahrzeug nähert sich nun zum Zwecke des Aufladens seiner Speicher für elektrische Energie, also seiner Akkumulatoren. Das erste Schaltelement 34 und das zweite Schaltelement 38 sind geöffnet.

In einem zweiten Schritt 82 wird zum Zeitpunkt 54 eine elektromechanische Verbindung über eine Schnittstelle 22 an einer Kabelgarnitur zwischen dem Elektrofahrzeug und der Ladestation für ein Elektrofahrzeug gebildet. Speziell besteht nun eine elektrisch leitende Verbindung über die Pilotsignalleitung 20 und die Pilotsignalmasseleitung 18. Der Ladewiderstand 8 und das erste Widerstandselement 30 bilden nun unter Einbezug der Diode 28 einen Spannungsteiler, welcher zu einem Absenken der vom Spannungsmessgerät 10 erfassten Gleichspannung auf einen zweiten Gleichspannungspegel 44 von neun Volt, welcher niedriger als der erste Gleichspannungspegel 42 ist, an der Pilotsignalleitung 20 führt. Diese Änderung des Gleichspannungspegels wird über das Spannungsmessgerät 10 gemessen und an das Ladestationssteuergerät 4 kommuniziert, welches daraufhin zu einem zweiten Zeitpunkt 56 erkennt, dass eine elektrische Verbindung mit einem Elektrofahrzeug entstanden ist.

In einem dritten Schritt 84 veranlasst nun das Ladestationssteuergerät 4 die Oszillator-Spannungsquelle 6, ein erstes pulsweitenmoduliertes Rechtecksignal 64 mit einem vorgegebenen Tastverhältnis zu erzeugen. Das Tastverhältnis kann einen ersten beispielhaften Zahlenwert von mindestens 90/10 (90%) oder - alternativ dazu - einen zweiten beispielhaften Zahlenwert von höchstens 5/95 (5%) aufweisen. Der obere Scheitelwert dieses ersten Rechtecksignals 64 liegt beim zweiten Gleichspannungspegel 44, während der untere Scheitelwert des ersten Rechtecksignals 64 bei einem negativen Spannungspegel 52 von minus zwölf Volt liegt.

In einem vierten Schritt 86, beginnend zum dritten Zeitpunkt 58, erfasst das Messgerät 26 das erste Rechtecksignal 64 und leitet die Information an das Fahrzeugsteuergerät 24 weiter. Das Fahrzeugsteuergerät 24 erkennt das von der Ladestation ausgesandte Signal und schaltet als Bestätigung das erste Schaltelement 34 nach fünfhundert Millisekunden ein, wodurch das zweite Widerstandselement 32 mit dem ersten Widerstandselement 30 parallel geschaltet wird. Dadurch sinkt der Gleichspannungspegel, welcher identisch ist dem oberen Scheitelwert des Rechtecksignals, auf welchen Gleichspannungspegel das erste Rechtecksignal 64 aufmoduliert wurde, vom zweiten Gleichspannungspegel 44 auf einen dritten Gleichspannungspegel 48 von drei Volt. Es entsteht durch die Überlappung ein zweites Rechtecksignal 66, welches ein identisches Tastverhältnis wie das erste Rechtecksignal 64 aufweist aber einen Gleichspannungspegel und also einen oberen Scheitelwert gleich einem dritten Gleichspannungspegel 48 hat. Nach weiteren fünfhundert Millisekunden veranlasst das Fahrzeugsteuergerät 24 ein Ausschalten des ersten Schaltelements 34, wodurch das zweite Widerstandselement 32 nicht mehr parallel zum ersten Widerstandselement 30 geschaltet ist. Das Spannungsmessgerät 10 in der Ladeelektronik 2 erkennt diese beiden Schaltvorgänge an der beschriebenen Änderung des Gleichspannungspegels und signalisiert dies dem Ladestationssteuergerät 4. Das Ladestationssteuergerät 4 erkennt dies und veranlasst die Oszillator-Spannungsquelle 6, kein pulsweitenmoduliertes Rechtecksignal zu senden sondern wieder die Pilotsignalleitung 20 nur mit einer ersten Gleichspannung 42 zu versorgen, was durch den beschriebenen Spannungsteiler zu einer gemessenen zweiten Gleichspannung 44 an der Pilotsignalleitung 20 führt.

Alternativ kann in dem vierten Schritt 86 das Fahrzeugsteuergerät 24 eine Kommunikation über Stromversorgungsleitungen mit dem dynamic host configuration protocol beginnen.

In einem fünften Schritt 88, beginnend zum vierten Zeitpunkt 60, erkennt das Fahrzeugsteuergerät 24 durch die Messung des Messgeräts 26 das Fehlen eines pulsweitenmodulierten Rechtecksignals. Das Fahrzeugsteuergerät 24 erzeugt nun durch ein pulsweitenmoduliertes Schalten des ersten Schaltelements 34 selbst ein drittes pulsweitenmoduliertes Signal 68. Das dritte pulsweitenmodulierte Signal 68 umfasst eine Identifikationsnachricht des Elektrofahrzeugs an die Ladestation.

Die Identifikationsnachricht besteht aus einer Folge von Bytes mit variabler Anzahl und also variabler Gesamtlänge der Nachricht in Byte. Die einzelnen Byte werden jeweils über die Pulsweitenmodulation kodiert. Die Identifikationsnachricht ist wie folgt aufgebaut: Als erstes wird eine Startkennung bestehend aus einem einzelnen Byte mit dem Wert 0x01 übertragen. Als nächstes folgt ein weiteres einzelnes Byte, welches einen Index zu einem Schlüssel angibt. Dieser Index wurde von dem Fahrzeugsteuergerät 24 zufällig bestimmt.

Dieser Schlüssel ist eine Abfolge von 256 Bytes und ist identisch sowohl im Fahrzeugsteuergerät 24 als auch im Ladestationssteuergerät 4 hinterlegt. Der Index gibt an, an welcher Position das Byte im Schlüssel steht, mit welchem für die Ver- oder Entschlüsselung wie im Folgenden beschrieben begonnen werden soll.

Als drittes wird nun ein weiteres einzelnes Byte gesendet, welches die Gesamtlänge der gesendeten Nachricht angibt. Die Gesamtlänge der Nachricht setzt sich zusammen aus einem Byte für die Startkennung, einem Byte für den Schlüsselindex, einem Byte für die Angabe der Länge, einer variablen Anzahl von Bytes für die Fahrzeugkennung und zwei Bytes für die zyklische Redundanzprüfung.

Das Byte, welches die Gesamtlänge der gesendeten Nachricht angibt, ist das erste verschlüsselte Byte der Nachricht. Die Verschlüsselung findet statt, in dem jedes einzelne Bit des zu verschlüsselnden Byte mit dem jeweiligen Bit des Bytes im Schlüssel durch eine exklusive Oder-Operation verknüpft wird (EXOR-Operation). Die Entschlüsselung geschieht entsprechend durch die Umkehr dieses Vorgangs. Nach jeder Ver- oder Entschlüsselung eines Bytes wird für die jeweils nächste Ver- oder Entschlüsselung das Byte an der nächsten Indexposition des Schlüssels verwendet. Nach Verwendung des letzten Bytes im Schlüssel wird wieder mit dem ersten Byte begonnen.

Als viertes wird nun die Kennung des Fahrzeugs ebenfalls byteweise verschlüsselt übertragen. Die Kennung identifiziert das Elektrofahrzeug oder den Besitzer des Elektrofahrzeugs eindeutig. Das Ladestationssteuergerät 4 hat nun nach erfolgter Entschlüsselung die Möglichkeit, aus der empfangenen Kennung auf für diese Kennung hinterlegte Informationen zuzugreifen. Diese Informationen können im Ladestationssteuergerät 4 selbst hinterlegt sein oder vom Ladestationssteuergerät 4 über eine weitere, hier nicht gezeigte Kommunikationsverbindung von anderer Stelle angefordert werden. Diese Informationen können sowohl die Ladeberechtigung des Elektrofahrzeugs als auch verschiedene technische Parameter des Elektrofahrzeugs wie maximalen Ladestrom, maximale Stromspeicherkapazität, Anzahl bereits durchlaufener Ladezyklen und vieles mehr umfassen.

Schließlich werden als fünftes zwei Byte ebenfalls byteweise verschlüsselt übertragen, welche eine Prüfsumme für eine zyklische Redundanzprüfung der empfangenen Nachricht bilden. Die Auswertung der Fahrzeugkennung hängt von der erfolgreichen zyklischen Redundanzprüfung der gesamten Nachricht anhand der empfangenen Prüfsumme ab.

Wenn die empfangene Kennung korrekt identifiziert werden und eine erfolgreiche Überprüfung stattfinden konnte, geht es zu einem sechsten Schritt 90 weiter.

Bei einer nicht korrekten Identifizierung veranlasst das Ladestationssteuergerät 4 eine Rückkehr im Ablauf zum zweiten Schritt 82. Schlägt eine Überprüfung der Kennung im fünften Schritt 88 dreimal hintereinander fehl, so generiert das Ladestationssteuergerät 4 einen Logbucheintrag mit einer Fehlermeldung und wartet darauf, dass die elektromechanische Verbindung zum Elektrofahrzeug gelöst wird, was an dem ersten Gleichspannungspegel 42 an der Pilotsignalleitung 20 erkannt werden kann, bevor wieder mit dem ersten Schritt 80 begonnen werden kann.

Im sechsten Schritt 90, beginnend zum fünften Zeitpunkt 62, sendet das Ladestationssteuergerät 4 über die Oszillator-Spannungsquelle 6 ein viertes pulsweitenmoduliertes Rechtecksignal 70. Dieses vierte pulsweitenmodulierte Rechtecksignal 70 stellt ein Informationssignal dar, welches Informationen zu einem Ladestrom umfasst. Es kodiert die höchste mögliche Ladestromstärke für dieses Elektrofahrzeug unter Berücksichtigung netztechnischer Einschränkungen umfasst. Das vierte pulsweitenmodulierte Rechtecksignal 70 hat ein Tastverhältnis, welches sich zwischen fünfzig und achtzig Prozent bewegt. Folglich kann schon anhand des Tastverhältnisses das vierte pulsweitenmodulierte Rechtecksignal 70 eindeutig von dem ersten pulsweitenmodulierten Rechtecksignal 64 unterschieden werden. Die höchste mögliche Ladestromstärke kann sich aus lokal für diese Kennung hinterlegten Daten ergeben oder aus Daten, welche bei der Prüfung der Kennung von externer Stelle empfangen wurden. Bei netztechnischen Einschränkungen, etwa durch hohe anderweitige Auslastungsspitzen, kann sich eine Einschränkung des möglichen Ladestroms unter den vom Elektrofahrzeug grundsätzlich unterstützten Wert ergeben. Das vierte pulsweitenmodulierte Rechtecksignal 70 wird vom Fahrzeugsteuergerät 24 mittels des Messgeräts 26 empfangen und gegebenenfalls die darin enthaltene Information für eine entsprechende Konfiguration der Ladevorrichtung des Elektrofahrzeugs verwendet. Das Fahrzeugsteuergerät 24 wiederum veranlasst das durchgehende Einschalten des zweiten Schaltelements 38. Hierdurch bildet die Parallelschaltung des dritten Widerstandselements 36 mit dem ersten Widerstandselement 30 einen Spannungsteiler mit Ladewiderstand 8, wodurch der Gleichspannungspegel auf der Pilotsignalleitung 20 einen vierten Gleichspannungspegel 46 von sechs Volt erreicht. Dieser vierte Gleichspannungspegel 46 bildet somit auch den oberen Scheitelwert des vierten pulsweitenmodulierten Rechtecksignals 70.

Im siebten Schritt 92 veranlasst das Ladestationssteuergerät 4 bei Erkennen des vierten Gleichspannungspegels 46 durch das Spannungsmessgerät 10 auf der Pilotsignalleitung 20 das Aktivieren, z.B. das Einschalten des Trennschaltelements 14, wodurch der Leistungsleiter 12 mit Spannung beaufschlagt und der Ladevorgang freigegeben wird. Das Elektrofahrzeug kann nun seinen elektrischen Energiespeicher durch den über die Schnittstelle 22 geführten Leistungsleiter 12 aufladen.

Wenn nun das Ladestationssteuergerät 4 durch das Spannungsmessgerät 10 feststellt, dass eine von dem vierten Gleichspannungspegel 46 abweichende Gleichspannung auf der Pilotsignalleitung 20 vorliegt, so unterbricht das Ladestationssteuergerät 4 das Trennschaltelement 14, wodurch der Leistungsleiter elektrofahrzeugseitig wieder spannungsfrei wird. Dies kann etwa dadurch geschehen, dass das Fahrzeugsteuergerät 24 nach Abschluss des Ladevorgangs das zweite Schaltelement 38 wieder ausschaltet. Es kann aber auch durch äußeren Eingriff geschehen, beispielsweise durch eine Auftrennung der Kabelgarnitur an der Schnittstelle 22, durch eine Auslösung des Endlagenschalters oder durch einen eintretenden Ausfall des Fahrzeugsteuergeräts 24. In allen Fällen einer Fehlfunktion weicht der Gleichspannungspegel auf der Pilotsignalleitung 20 vom vierten Gleichspannungspegel 46 ab, wodurch automatisch eine Unterbrechung des Trennschaltelements 14 bewirkt wird. Hierdurch ist die Funktionalität eines Not-Ausschalters gewährleistet.

Fig. 2b zeigt den Spannungsverlauf und das Massepotential 50 an der Pilotsignalleitung 20 gemäß einer zweiten Art der Kommunikation zwischen einer Ladestation und einem Elektrofahrzeug. Das im Zusammenhang mit Fig. 2b dargestellte Ausführungsbeispiel entspricht in Bezug auf die mit Fig. 2a übereinstimmenden Bezugszeichen in allen Einzelheiten dem zuvor beschriebenen Ablauf, insbesondere in Bezug auf den Ablauf bis zum Erreichen des vierten Zeitpunktes 60 und wiederum ab dem Aussenden des dritten pulsweitenmodulierten Signals 68.

Während aber gemäß dem ersten Ausführungsbeispiel nach Fig. 2a unmittelbar, nachdem zum vierten Zeitpunkt 60 das Fahrzeugsteuergerät 24 durch die Messung des Messgerätes 26 das Fehlen eines pulsweitenmodulierten Rechtecksignals erkannt hat, durch das Fahrzeugsteuergerät 24 das dritte pulsweitenmodulierte Signal 68 erzeugt wird, ist nach dem in Fig. 2b dargestellten Ablauf folgende dazu alternative Kommunikationsweise vorgesehen: Zum vierten Zeitpunkt 60, nach dem Erkennen des Fehlens eines pulsmodulierten Signals, tritt zunächst eine vorgegebene Verzögerungszeit, beispielsweise mit einer Zeitdauer von 200ms ein, ohne dass eine Nachricht jedweder Art gesendet wird. Wenn sich nach Ablauf dieser Verzögerungszeit zum Zeitpunkt 65 der gemessene Signalpegel an der Pilotsignalleitung 20 gegenüber dem zweiten Pegel nicht verändert hat, insbesondere kein weiteres Auslösesignal von der Ladestation ausgesandt worden ist, wird seitens der Ladestation ein Erzeugungssignal an das Elektrofahrzeug ausgesandt. Die Zeitdauer, während der dieses Erzeugungssignal von der Ladestation auf das Elektrofahrzeug übertragen wird, erstreckt sich vom Zeitpunkt 63 bis zum Zeitpunkt 65 in Fig. 2b.

Dieses Erzeugungssignal besteht aus einer Folge von Bytes mit einer vorgegebenen Anzahl. Die einzelnen Byte werden jeweils über Pulsweitenmodulation kodiert. Das Erzeugungssignal ist wie folgt aufgebaut: Als erstes wird eine Startkennung bestehend aus einem einzelnen Byte mit dem Wert 0x01 übertragen. Als nächstes folgt eine vorgegebene Anzahl von Bytes, die eine Zählernummer in Form einer Server ID beinhalten. Die Server ID kann beispielsweise kennzeichnend für eine bestimmte Ladestation stehen. Im Anschluss daran wird eine vorgegebene Anzahl von Bytes übertragen, die einem Zählwert entsprechen. Dieser Zählwert kann beispielsweise als inkremental ansteigender oder abfallender Zahlenwert von der Ladestation vorgegeben werden. Als nächstes folgt ein weiteres einzelnes Byte, welches einen Index zu einem Schlüssel angibt. Dieser Index wurde von dem Fahrzeugsteuergerät 24 zufällig bestimmt. Dieser Schlüssel ist - wie im Zusammenhang mit dem Ausführungsbeispiel nach Fig. 2a beschreiben - eine Abfolge von 256 Bytes und kann identisch sowohl im Fahrzeugsteuergerät 24 als auch im Ladestationssteuergerät 4 hinterlegt sein. Alternativ dazu kann dieser Schlüssel als sogenannter "internal key" bei der Herstellung des Identifikationsmoduls eingebracht sein und kann selbst nicht ausgelesen werden. Bei einem solchen "internal key" kann es sich um einen weiteren Schlüssel handeln, welcher zusätzlich zu dem Schlüssel vorgesehen ist, der bei den vorhandenen Modulen bereits als gleich hinterlegt und damit Ladestation und Fahrzeug bekannt ist. Dieser weitere Schlüssel ("internal key") ist in der Art einer PIN (persönliche Identifizierungsnummer) als zur Vertrags ID gehörig ausgebildet und wird in dem beschriebenen Verfahren niemals direkt übertragen sondern immer nur bei einer Hashwertbildung herangezogen. Schließlich werden zwei Bytes (CRC-16) übertragen, welche eine Prüfsumme für eine zyklische Redundanzprüfung der empfangenen Nachricht bilden.

Unmittelbar im Anschluss an die Übertragung des Erzeugungssignals zum Elektrofahrzeug wird beginnend mit dem Zeitpunkt 65 das Fahrzeugidentifikationssignal vom Elektrofahrzeug zur Ladestation hin übertragen. Dieses besteht im wesentlichen aus dem im Zusammenhang mit Fig. 2a beschriebenen Signal, allerdings mit dem Unterschied, dass der Index zu einem Schlüssel fehlt, da diese Information bereits in dem zuvor von der Ladestation übertragenen Erzeugungssignal enthalten war.

Die Identifikationsnachricht nach Ausführungsbeispiel Fig. 2b setzt sich also zusammen aus einem Byte für die Startkennung, einem Byte für die Angabe der Länge, einer variablen Anzahl von Bytes für die Fahrzeugkennung, zwei Bytes für die zyklische Redundanzprüfung über den Zählwert und den kryptographischen Schlüssel sowie zwei weitere Bytes für die zyklische Redundanzprüfung.

Im Unterschied zu der Kommunikationsweise nach Fig.2a, bei der der Index auf den kryptographischen Schlüssel im Rahmen der vom Elektrofahrzeug übertragenen Identifikationsnachricht übertragen wird, erfolgt gemäß Fig.2b die Generierung des Indexes auf den kryptographischen Schlüssel auf Seiten der Ladestation unter Berücksichtigung des von der Ladestation verschlüsselt übertragenen Zählwertes. Eine solche Vorgehensweise bietet einen besonderen Vorteil beim Schutz gegen sog. "Replay Angriffe", bei denen ein nicht-authorisierter Benutzer zuvor aufgezeichnete oder ausgespähte Daten aussendet, um eine fremde Identität, nämlich die eines authorisierten Benutzers, vorzutäuschen.

## Patentansprüche

1. Ladestationsseitiges Verfahren zur Kommunikation mit einem Elektrofahrzeug, umfassend:
- Generieren eines ersten vorbestimmten Gleichspannungspegels auf einem Pilotleiter (20),
- Erkennen des Bestehens einer elektrischen Verbindung mit einem Elektrofahrzeug durch Erfassen eines zweiten vorbestimmten Gleichspannungspegels auf dem Pilotleiter (20),
- Aussenden eines Auslösesignals auf dem Pilotleiter (20),
- wobei das Auslösesignal dem Gleichspannungspegel als zeitlich variables Signal auf dem Pilotleiter (20) überlagert wird,
- Erfassen eines Fahrzeugidentifikationssignals auf dem Pilotleiter (20), und
- Freigabe der Stromversorgung auf einem Leistungsleiter (12).

2. Fahrzeugseitiges Verfahren zur Kommunikation mit einer Ladestation für ein Elektrofahrzeug, umfassend:
- Generieren eines ersten vorbestimmten Gleichspannungspegels auf einem Pilotleiter (20),
- Erkennen des Bestehens einer elektrischen Verbindung mit dem Elektrofahrzeug durch Erfassen eines zweiten vorbestimmten Gleichspannungspegels auf dem Pilotleiter (20),
- Aussenden eines Auslösesignals auf dem Pilotleiter (20),
- wobei das Auslösesignal dem Gleichspannungspegel als zeitlich variables Signal auf dem Pilotleiter (20) überlagert wird,
- Erfassen des Auslösesignals auf dem Pilotleiter (20),
- Aussenden eines Fahrzeugidentifikationssignals auf dem Pilotleiter (20),
- Erfassen des Fahrzeugidentifikationssignals auf dem Pilotleiter (20),
- Freigabe der Stromversorgung auf einem Leistungsleiter (12) und
- Aufnahme eines Ladestroms auf dem Leistungsleiter (12).

3. Computerprogrammcodemittel, welche geeignet sind, die Verfahrensschritte des Verfahrens nach einem der Ansprüche 1 bis 2 auszuführen.

4. Vorrichtung zur Kommunikation einer Ladestation mit einem Elektrofahrzeug, umfassend:
- Spannungserzeugungsmittel (6) zum Generieren eines ersten vorbestimmten Gleichspannungspegels auf einem Pilotleiter (20),
- Detektormittel (4, 10) zum Erkennen des Bestehens einer elektrischen Verbindung mit einem Elektrofahrzeug durch Erfassen eines zweiten vorbestimmten Gleichspannungspegels auf dem Pilotleiter (20),
- Signalerzeugungsmittel (6) zum Aussenden eines Auslösesignals auf dem Pilotleiter (20),
- wobei das Auslösesignal dem Gleichspannungspegel als zeitlich variables Signal auf dem Pilotleiter (20) überlagert wird, und
- Sensormittel (26) zum Erfassen eines Fahrzeugidentifikationssignals auf dem Pilotleiter (20), und
- Schaltmittel (14) zur Freigabe der Stromversorgung auf einem Leistungsleiter (12).

5. Vorrichtung nach Anspruch 4, wobei die Detektormittel (4, 10) zur Erfassung einer vorübergehenden vorbestimmten Gleichspannungsänderung auf dem Pilotleiter (20) geeignet sind, welche zumindest teilweise dem Auslösesignal überlagert ist.

6. Vorrichtung nach Anspruch 4 oder 5, wobei die Signalerzeugungsmittel (6) zum Aussenden eines Informationen zu einem Ladestrom umfassenden Informationssignals auf dem Pilotleiter (20) geeignet sind.

7. Vorrichtung nach Anspruch 6, wobei die Signalformen des Informationssignals und des Auslösesignals jeweils mindestens einen Parameter aufweisen, welcher jeweils in verschiedenen, nicht überlappenden Wertebereichen liegt.

8. Vorrichtung nach Anspruch 6 oder 7, wobei das Informationssignal und das Auslösesignal jeweils pulsweitenmodulierte Signale sind.

9. Vorrichtung nach Anspruch 8, wobei die Tastverhältnisse des Informationssignals und des Auslösesignals in sich jeweils nicht überlappenden Wertebereichen liegen.

10. Vorrichtung zur Kommunikation eines Elektrofahrzeugs mit einer Ladestation, umfassend:
- Spannungsteilermittel (8, 28, 30) zum Erzeugen eines ersten vorbestimmten Gleichspannungspegels auf einem Pilotleiter (20) bei Anlegen eines zweiten vorbestimmten Gleichspannungspegels auf dem Pilotleiter (20),
- Sensormittel (24) zum Erfassen eines Auslösesignals auf dem Pilotleiter (20), wobei das Auslösesignal dem Gleichspannungspegel als zeitlich variables Signal auf dem Pilotleiter (20) überlagert ist,
- Signalerzeugungsmittel (24) zum Aussenden eines Fahrzeugidentifikationssignals auf dem Pilotleiter (20), und
- Ladungsaufnahmemittel zur Aufnahme eines Ladestroms auf einem Leistungsleiter (12).

11. System zur Kommunikation zwischen einem Elektrofahrzeug und einer Ladestation, umfassend:
- Spannungserzeugungsmittel (6) zum Generieren eines ersten vorbestimmten Gleichspannungspegels auf einem Pilotleiter (20),
- Spannungsteilermittel (8, 28, 30) zum Erzeugen eines zweiten vorbestimmten Gleichspannungspegels auf dem Pilotleiter (20) bei Anlegen des ersten vorbestimmten Gleichspannungspegels auf dem Pilotleiter (20),
- Detektormittel (4, 10) zum Erkennen des Bestehens einer elektrischen Verbindung zwischen der Ladestation und dem Elektrofahrzeug durch Erfassen des zweiten vorbestimmten Gleichspannungspegels auf dem Pilotleiter (20),
- erste Signalerzeugungsmittel (6) zum Aussenden eines Auslösesignals auf dem Pilotleiter (20), wobei das Auslösesignal dem Gleichspannungspegel als zeitlich variables Signal auf dem Pilotleiter (20) überlagert ist,
- Sensormittel (24) zum Erfassen eines Auslösesignals auf dem Pilotleiter (20),
- zweite Signalerzeugungsmittel (24) zum Aussenden eines Fahrzeugidentifikationssignals auf dem Pilotleiter (20),
- Sensormittel zum Erfassen eines Fahrzeugidentifikationssignals auf dem Pilotleiter (20),
- Schaltmittel (14) zur Freigabe der Stromversorgung auf einem Leistungsleiter (12), und
- Ladungsaufnahmemittel zur Aufnahme eines Ladestroms auf einem Leistungsleiter (12).

## Claims

1. A charging station side method of communicating with an electric vehicle, comprising:
- generating a first predetermined DC power level on a pilot conductor (20),
- detecting the existence of an electrical connection with an electric vehicle by detecting a second predetermined DC power level on the pilot conductor (20),
- sending a trigger signal on the pilot conductor (20),
- wherein the trigger signal is superimposed on the DC voltage level as a time variable signal on the pilot conductor (20),
- detecting a vehicle identification signal on the pilot conductor (20), and
- releasing of the power supply on a power conductor (12).

2. A vehicle side method of communicating with a charging station for an electric vehicle, comprising:
- generating a first predetermined DC power level on a pilot conductor (20),
- detecting the existence of an electrical connection with the electric vehicle by detecting a second predetermined DC power level on the pilot conductor (20),
- sending a trigger signal on the pilot conductor (20),
- wherein the trigger signal is superimposed on the DC voltage level as a time variable signal on the pilot conductor (20),
- detecting the trigger signal on the pilot conductor (20),
- sending a vehicle identification signal on the pilot conductor (20),
- detecting the vehicle identification signal on the pilot conductor (20),
- releasing of the power supply on a power conductor (12) and
- receiving a charging current on the power conductor (12).

3. Computer program code means which are configured to carry out the method steps of the method according to one of claims 1 to 2.

4. An apparatus for a communication of a charging station with an electric vehicle, comprising:
- voltage generating means (6) for generating a first predetermined DC power level on a pilot conductor (20),
- detecting means (4, 10) for detecting the existence of an electrical connection with an electric vehicle by detecting a second predetermined DC power level on the pilot conductor (20),
- signal generating means (6) for sending a trigger signal on the pilot conductor (20),
- wherein the trigger signal is superimposed on the DC voltage level as a time variable signal on the pilot conductor (20), and
- sensor means (26) for detecting a vehicle identification signal on the pilot conductor (20), and
- switching means (14) for releasing the power supply to a power conductor (12).

5. Apparatus according to claim 4, wherein the detecting means (4, 10) are configured to detect a temporary predetermined DC voltage change on the pilot conductor (20) which is at least partially superimposed on the trigger signal.

6. Apparatus according to claim 4 or 5, wherein the signal generating means (6) are configured for transmitting information about a charging current comprehensive information signal on the pilot conductor (20).

7. Apparatus according to claim 6, wherein the signal shapes of the information signal and the trigger signal each have at least one parameter, which is in each case in different non overlapping value ranges.

8. Apparatus according to claim 6 or 7, wherein the information signal and the trigger signal are each pulse width modulated signals.

9. Apparatus according to claim 8, wherein the duty cycles of the information signal and the trigger signal are in each case in non overlapping value ranges.

10. A device for communicating an electric vehicle with a charging station, comprising:
- voltage divider means (8, 28, 30) for generating a first predetermined DC power level on a pilot conductor (20) upon applying of a second predetermined DC power level on the pilot conductor (20),
- sensor means (24) for detecting a trigger signal on the pilot conductor (20),
- wherein the trigger signal is superimposed on the DC voltage level as a time variable signal on the pilot conductor (20),
- signal generating means (24) for transmitting a vehicle identification signal on the pilot conductor (20), and
- charge receiving means for receiving a charging current on a power conductor (12).

11. A system for communicating between an electric vehicle and a charging station, comprising:
- voltage generating means (6) for generating a first predetermined DC power level on a pilot conductor (20),
- voltage divider means (8, 28, 30) for generating a second predetermined DC power level on the pilot conductor (20) upon applying of the first predetermined DC power level on the pilot conductor (20),
- detecting means (4, 10) for detecting the existence of an electrical connection between the charging station and the electric vehicle by detecting the second predetermined DC voltage level on the pilot conductor (20),
- first signal generating means (6) for sending a trigger signal on the pilot conductor (20),
- wherein the trigger signal is superimposed on the DC voltage level as a time variable signal on the pilot conductor (20),
- sensor means (24) for detecting a trigger signal on the pilot conductor (20),
- second signal generating means (24) for transmitting a vehicle identification signal on the pilot conductor (20),
- sensor means for detecting a vehicle identification signal on the pilot conductor (20),
- switching means (14) for releasing the power supply to a power conductor (12), and
- charge receiving means for receiving a charging current on a power conductor (12).

## Revendications

1. Procédé côté borne de recharge pour la communication avec un véhicule électrique, ledit procédé consistant :
- à générer un premier niveau de tension continue, prédéfini, sur un conducteur pilote (20),
- à reconnaître l'existence d'une connexion électrique à un véhicule électrique, par détection d'un deuxième niveau de tension continue, prédéfini, sur le conducteur pilote (20),
- à envoyer un signal de déclenchement sur le conducteur pilote (20),
- où le signal de déclenchement, en tant que signal variable dans le temps sur le conducteur pilote (20), est superposé au niveau de tension continue,
- à détecter un signal d'identification de véhicule sur le conducteur pilote (20), et
- à débloquer l'alimentation en courant électrique fourni sur un conducteur de puissance (12).

2. Procédé côté véhicule pour la communication avec une borne de recharge pour un véhicule électrique, ledit procédé consistant :
- à générer un premier niveau de tension continue, prédéfini, sur un conducteur pilote (20),
- à reconnaître l'existence d'une connexion électrique au véhicule électrique, par détection d'un deuxième niveau de tension continue, prédéfini, sur le conducteur pilote (20),
- à envoyer un signal de déclenchement sur le conducteur pilote (20),
- où le signal de déclenchement, en tant que signal variable dans le temps sur le conducteur pilote (20), est superposé au niveau de tension continue,
- à détecter le signal de déclenchement sur le conducteur pilote (20),
- à envoyer un signal d'identification de véhicule sur le conducteur pilote (20),
- à détecter le signal d'identification de véhicule sur le conducteur pilote (20),
- à débloquer l'alimentation en courant électrique fourni sur un conducteur de puissance (12), et
- à recevoir un courant de charge sur le conducteur de puissance (12).

3. Moyens pour des codes de programme informatique, moyens qui sont appropriés pour exécuter les étapes du procédé selon l'une des revendications 1 à 2.

4. Dispositif servant à la communication d'une borne de recharge avec un véhicule électrique, ledit dispositif comprenant :
- des moyens de production de tension (6) servant à la génération d'un premier niveau de tension continue, prédéfini, sur un conducteur pilote (20),
- des moyens formant détecteurs (4, 10) et servant à la reconnaissance de l'existence d'une connexion électrique à un véhicule électrique, par détection d'un deuxième niveau de tension continue, prédéfini, sur le conducteur pilote (20),
- des moyens de production de signaux (6) servant à l'envoi d'un signal de déclenchement sur le conducteur pilote (20),
- où le signal de déclenchement, en tant que signal variable dans le temps sur le conducteur pilote (20), est superposé au niveau de tension continue, et
- des moyens formant capteurs (26) et servant à la détection d'un signal d'identification de véhicule sur le conducteur pilote (20), et
- des moyens de commutation (14) servant au déblocage de l'alimentation en courant électrique fourni sur le conducteur de puissance (12).

5. Dispositif selon la revendication 4, où les moyens formant détecteurs (4, 10) sont appropriés pour servir à la détection d'une modification de la tension continue, prédéfinie et passagère, sur le conducteur pilote (20), laquelle modification de tension continue est superposée au moins partiellement au signal de déclenchement.

6. Dispositif selon la revendication 4 ou 5, où les moyens de production de signaux (6) sont appropriés pour servir à l'envoi, sur le conducteur pilote (20), d'un signal d'information comprenant des informations concernant un flux de charge.

7. Dispositif selon la revendication 6, où les formes de signaux concernant le signal d'information et le signal de déclenchement présentent à chaque fois au moins un paramètre qui se situe à chaque fois dans différentes zones de valeurs ne se chevauchant pas.

8. Dispositif selon la revendication 6 ou 7, où le signal d'information et le signal de déclenchement sont à chaque fois des signaux à modulation de largeur d'impulsions.

9. Dispositif selon la revendication 8, où les rapports cycliques du signal d'information et du signal de déclenchement se situent à chaque fois dans des zones de valeurs ne se chevauchant pas.

10. Dispositif servant à la communication d'un véhicule électrique avec une borne de recharge, ledit dispositif comprenant :
- des moyens diviseurs de tension (8, 28, 30) servant à la production d'un premier niveau de tension continue, prédéfini, sur un conducteur pilote (20), lors de l'application sur le conducteur pilote (20), d'un deuxième niveau de tension continue, prédéfini,
- des moyens formant capteurs (24) et servant à la détection d'un signal de déclenchement sur le conducteur pilote (20), où le signal de déclenchement, en tant que signal variable dans le temps sur le conducteur pilote (20), est superposé au niveau de tension continue,
- des moyens de production de signaux (24) servant à l'envoi, sur le conducteur pilote (20), d'un signal d'identification de véhicule, et
- des moyens de réception de charge servant à la réception d'un flux de charge sur un conducteur de puissance (12).

11. Système de communication entre un véhicule électrique et une borne de recharge, ledit système comprenant :
- des moyens de production de tension (6) servant à la génération d'un premier niveau de tension continue, prédéfini, sur un conducteur pilote (20),
- des moyens diviseurs de tension (8, 28, 30) servant à la production d'un deuxième niveau de tension continue, prédéfini, sur le conducteur pilote (20), lors de l'application du premier niveau de tension continue, prédéfini, sur le conducteur pilote (20),
- des moyens formant détecteurs (4, 10) et servant à la reconnaissance de l'existence d'une connexion électrique entre la borne de recharge et le véhicule électrique, par détection du deuxième niveau de tension continue, prédéfini, sur le conducteur pilote (20),
- des premiers moyens de production de signaux (6) servant à l'envoi d'un signal de déclenchement sur le conducteur pilote (20), où le signal de déclenchement, en tant que signal variable dans le temps sur le conducteur pilote (20), est superposé au niveau de tension continue,
- des moyens formant capteurs (24) et servant à la détection d'un signal de déclenchement sur le conducteur pilote (20),
- des deuxièmes moyens de production de signaux (24) servant à l'envoi d'un signal d'identification de véhicule sur le conducteur pilote (20),
- des moyens formant capteurs et servant à la détection d'un signal d'identification de véhicule sur le conducteur pilote (20),
- des moyens de commutation (14) servant au déblocage de l'alimentation en courant électrique fourni sur un conducteur de puissance (12), et
- des moyens de réception de charge servant à la réception d'un flux de charge sur un conducteur de puissance (12).
